(19)

Europäisches
Patentamt
European
Patent Office
Office européen
des brevets

(11) **EP 2 765 380 A2**

(12) **EUROPEAN PATENT APPLICATION**
published in accordance with Art. 153(4) EPC

(43) Date of publication:
**13.08.2014 Bulletin 2014/33**

(21) Application number: **12836800.8**

(22) Date of filing: **26.11.2012**

(51) Int Cl.:
*F27D 1/00* (2006.01)    *C03C 13/00* (2006.01)
*D01F 9/08* (2006.01)    *D04H 1/4209* (2012.01)

(86) International application number:
**PCT/IB2012/002463**

(87) International publication number:
**WO 2013/046052 (04.04.2013 Gazette 2013/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2011   JP 2011212996**

(71) Applicant: **Nichias Corporation**
**Tokyo 104-8555 (JP)**

(72) Inventors:
• **OCHI, Yoshinori**
**Tokyo 104-8555 (JP)**
• **MIHARA, Tetsuya**
**Tokyo 104-8555 (JP)**

• **YONAIYAMA, Ken**
**Tokyo 104-8555 (JP)**
• **KISHIKI, Tomohiko**
**Tokyo 104-8555 (JP)**
• **NAKAJIMA, Takashi**
**Tokyo 104-8555 (JP)**

(74) Representative: **Schmitz, Joseph**
**Isler & Pedrazzini AG**
**Postfach 1772**
**8027 Zürich (CH)**

Remarks:
The restoration of the right of priority granted by the receiving Office is effective before the EPO (R. 49ter. 1(a) PCT).

(54) **INORGANIC FIBER BLOCK**

(57)    An inorganic fiber block obtained by stacking blanket-like products each including inorganic fibers, wherein the composition of the inorganic fibers have the following composistion: $SiO_2$: 66 to 82 mass%, CaO:10 to 34 mass%, MgO :0 to 3 mass%, $Al_2O_3$: 0 to 5 mass%, and the total of $SiO_2$, CaO, MgO and $Al_2O_3$ is 98 mass% or more.

EP 2 765 380 A2

**Description**

Technical Field

The invention relates to an inorganic fiber block. In particular, the invention relates to an inorganic fiber block used as a refractory heat insulating material or the like for various industrial furnaces.

Background Art

Due to its excellent heat resistance, an inorganic fiber block is used as a refractory heat insulating material for lining of various industrial furnaces, for example. An inorganic fiber block is obtained by compressing a stacked body of blankets each formed of inorganic fibers and tightening by means of a band or by sewing into a block shape. An inorganic fiber block is installed onto a furnace wall or a furnace casing, and used as a heat insulating structural body. In order to facilitate working, an inorganic fiber block may contain a support fitting, a jig or the like.

As the inorganic fiber used as the material for the blanket, ceramic fibers are widely used. For example, Patent Document 1 discloses an inorganic fiber block obtained by stacking ceramic fiber blankets and alumina fiber blankets.

A block prepared by using a blanket formed of ceramic fibers may suffer occurrence of joint opening between blocks due to heat shrinkage when used at high temperatures. Joint opening may damage the wall of a furnace.

In order to suppress occurrence of joint opening, Patent Documents 1, 2 or the like propose an inorganic fiber block obtained by combining ceramic fiber blankets and alumina fiber blankets. However, this technology involves a problem that alumina fibers are significantly expensive.

Related Art Documents

Patent Documents

Patent Document 1: JP-A-H09-156989
Patent Document 2: JP-A-2006-76015

Summary of the invention

An object of the invention is to provide an inorganic fiber block which can suppress occurrence of joint opening generated between inorganic fiber blocks.

As a result of extensive studies, the inventors have found that by adjusting the content of each oxide constituting an inorganic fiber, i.e. $SiO_2$, $CaO$, $MgO$ and $Al_2O_3$, to be a prescribed value, occurrence of joint opening between inorganic fiber blocks can be suppressed. The invention has been made based on this finding.

According to the invention, the following inorganic fiber block or the like are provided.

1. An inorganic fiber block obtained by stacking blanket-like products each comprising inorganic fibers, wherein the composition of the inorganic fibers have the following composition:

$SiO_2$: 66 to 82 mass%
$CaO$: 10 to 34 mass%
$MgO$: 3 mass% or less
$Al_2O_3$: 5 mass% or less
other oxides: less than 2 mass%.

2. The inorganic fiber block according to claim 1, wherein the inorganic fibers have the following composition:

$SiO_2$: 71 to 80 mass%
$CaO$: 18 to 27 mass%
$MgO$: 0 to 3 mass%
$Al_2O_3$: 1.1 to 3.4 mass%,
provided that the content of each of $ZrO_2$ and $R_2O_3$ (R is selected from Sc, La, Ce, Pr, Nd, Sm, Eu, Gd, Tb, Dy, Ho, Er, Tm, Yb, Lu, Y or a mixture of these) is 0.1 mass% or
less, the content of an alkaline metal oxide is 0.2 mass% or less, and the total of $SiO_2$, $CaO$, $MgO$ and $Al_2O_3$

is 99 mass% or more.

3. The inorganic fiber block according to 1, wherein the inorganic fibers have the following composition:

$SiO_2$: 71 to 80 mass%
CaO: 18 to 27 mass%
MgO: 0 to 3 mass%
$Al_2O_3$: 2.0 to 3.4 mass%,
provided that the content of each of $ZrO_2$ and $R_2O_3$ (R is selected from Sc, La, Ce, Pr, Nd, Sm, Eu, Gd, Tb, Dy, Ho, Er, Tm, Yb, Lu, Y or a mixture of these) is 0.1 mass% or less, and the total content of $SiO_2$, CaO, MgO and $Al_2O_3$ is 99 mass% or more.

4. The inorganic fiber block according to any of 1 to 3, which keeps its original shape after heating at least at 1000°C for 8 hours.

5. The inorganic fiber block according to any of 1 to 3, which keeps its original shape after heating at least at 1300°C for 8 hours.

6. A heat insulating structural body obtained by arranging two or more inorganic fiber blocks according to any of 1 to 5 such that they are adjacent with each other.

7. The heat insulating structural body according to 6, wherein joint opening between the inorganic fiber blocks constituting the heat insulating structural body or between the blankets constituting the inorganic fiber block is 7.5 mm or less after heating at 1300°C for 24 hours.

According to the invention, an inorganic fiber block which can suppress joint opening between inorganic fiber blocks can be provided. The inorganic fiber block of the invention is produced from bio-soluble inorganic fibers. Therefore, when installing or dismantling a heat insulating structural body formed of inorganic fiber blocks, there is only small possibility that the worker's heath is injured.

Brief Description of the Drawings

FIG. 1 is a schematic perspective view of the inorganic fiber block according to one embodiment of the invention;
FIG. 2 is a schematic perspective view of the inorganic fiber block according to another embodiment of the invention;
FIG. 3 is a schematic side view of a heat insulating structural body formed for a heating test, in which (a) shows the state before the heating test, and (b) shows the state after the heating test;
FIG. 4 is photographs of a heat insulating structural body formed of inorganic fiber blocks prepared in Example 2, in which (a) shows the state before heating, and (b) shows the state after heating at 1300°C for 24 hours;
FIG. 5 is photographs of a heat insulating structural body formed of inorganic fiber blocks prepared in Comparative Example 1, in which (a) shows the state before heating, and (b) shows the state after heating at 1300°C for 24 hours;
FIG. 6 is photographs of a heat insulating structural body formed of inorganic fiber blocks prepared in Example 3, in which (a) shows the state before heating, and (b) shows the state after heating at 1300°C for 24 hours; and
FIG. 7 is photographs of a heat insulating structural body formed of inorganic fiber blocks prepared in Comparative Example 2, in which (a) shows the state before heating, and (b) shows the state after heating at 1300°C for 24 hours.

Mode for Carrying out the Invention

The inorganic fiber block of the invention is a stack of blanket-like products formed of inorganic fibers and the inorganic fibers have the following composition:

$SiO_2$: 66 to 82 mass% (for example, 68 to 80 mass%, 70 to 80 mass%, 71 to 80 mass% or 71 to 76 mass%)
CaO: 10 to 34 mass% (for example, 20 to 30 mass% or 21 to 26 mass%)
MgO: 3 mass% or less (for example, 1 mass% or less)
$Al_2O_3$: 5 mass% or less (for example, 3.5 mass% or less or 3 mass% or less. Or, 1 mass% or more, 1.1 mass% or more, or 2 mass% or more)
Other oxides: Less than 2 mass% (or the total content of $SiO_2$, CaO, MgO, $Al_2O_3$ is 98 mass% or more)

If the content of $SiO_2$ is in the above-mentioned range, the heat resistance is improved. If the contents of CaO and MgO are in the above-mentioned range, the bio-solubility of the inorganic fibers before and after heating is improved.

If the content of $Al_2O_3$ is in the above-mentioned range, heat resistance is improved.

As other oxides, an alkaline metal oxide ($K_2O$, $Na_2O$ or the like), $Fe_2O_3$, $ZrO_2$, $P_2O_5$, $B_2O_3$, $R_2O_3$ (R is selected from Sc, La, Ce, Pr, Nd, Sm, Eu, Gd, Tb, Dy, Ho, Er, Tm, Yb, Lu, Y or a mixture of these) can be given. The inorganic fiber block of the invention may or may not contain one or more of these oxides. The content of each of the other oxides may be 0.2 mass% or less or 0.1 mass% or less. It is preferred that the total content of all alkaline metal oxides be 0.2 mass% or less or 0.1 mass% or less.

The total content of $SiO_2$, CaO, MgO, $Al_2O_3$ may exceed 98 mass% or exceed 99 mass%.

In the invention, it is preferred that the inorganic fibers have the following composition:

| | |
|---|---|
| $SiO_2$ | 70 mass% to 80 mass% |
| CaO | 18 mass% to 27 mass% |
| MgO | 0 to 3 mass% |
| $Al_2O_3$ | 1 mass% to 3.5 mass% |

Further, it is preferred that the inorganic fibers have the following composition:

| | |
|---|---|
| $SiO_2$ | 71 mass% to 80 mass% |
| CaO | 18 mass% to 27 mass% |
| MgO | 0 to 3 mass% |
| $Al_2O_3$ | 1.1 mass% to 3.4 mass% |

The above-mentioned fibers normally do not contain $ZrO_2$. The content of $ZrO_2$ is 0.1 mass% or less or less than 0.1 mass%.

Further, normally, the above-mentioned fibers do not contain $R_2O_3$ (R is selected from Sc, La, Ce, Pr, Nd, Sm, Eu, Gd, Tb, Dy, Ho, Er, Tm, Yb, Lu, Y or a mixture of these). The content of $R_2O_3$ is 0.1 mass% or less or less than 0.1 mass%.

The alkaline metal oxide may or may not be contained. Each of the alkaline metal oxides is contained in an amount of 0.2 mass% or less, 0.15 mass% or less or 0.1 mass% or less. It is preferred that the total content of all alkaline metal oxides be 0.2 mass% or less. Each of the alkaline metal oxides may be contained in an amount of exceeding 0.01 mass%, 0.05 mass% or more or 0.08 mass% or more.

$K_2O$ may or may not be contained. The content thereof may be 0.2 mass% or less, 0.15 mass% or less or 0.1 mass% or less. $K_2O$ may be contained in an amount exceeding 0.01 mass%, 0.05 mass% or more or 0.08 mass% or more.

$Na_2O$ may or may not be contained. The content thereof may be 0.2 mass% or less, 0.15 mass% or less or 0.1 mass% or less. $Na_2O$ may be contained in an amount exceeding 0.01 mass%, 0.05 mass% or more or 0.08 mass% or more.

The above-mentioned fibers normally do not contain $TiO_2$. The above-mentioned fibers do not contain each of ZnO, $B_2O_3$, $P_2O_5$ and SrO. SrO or $P_2O_5$ may be contained in an amount of 0.1 mass% or less, or less than 0.1 mass%.

$Fe_2O_3$ may be contained in an amount of 0.1 to 0.3 mass%.

The total content of $SiO_2$, CaO, MgO, and $Al_2O_3$ is 99 mass% or more, 99.5 mass% or more or 99.7 mass% or more.

When $Fe_2O_3$ is contained, the total content of $SiO_2$, CaO, MgO, $Al_2O_3$ and $Fe_2O_3$ may be 99.7 mass% or more, 99.8 mass% or more, 99.9 mass% or more or 100 mass%.

If the content of $SiO_2$ is 71 to 80 mass%, the fibers have excellent heat resistance. If the content of $SiO_2$ is too high, the amount of cristoballite as a carcinogenic substance which is generated after heating may increase. The content of $SiO_2$ is preferably 71 to 77 mass%, more preferably 71 to 76 mass%.

If the content of CaO is 18 to 27 mass%, the inorganic fibers have excellent bio-solubility, and the tensile strength of the product is increased. The content of CaO is preferably 20 to 27 mass%, more preferably 21 to 26 mass%, with 23 to 26 mass% being further preferable.

If the content of MgO is 0 to 3 mass%, the inorganic fibers have excellent bio-solubility. If the content of MgO is too high, the bio-solubility may be deteriorated after heating. The content of MgO is preferably 0 to 1 mass%. Although the preferable content is 0 mass%, normally MgO is contained in an amount exceeding 0 mass% due to the mixing of impurities.

If the content of $Al_2O_3$ is 1.1 to 3.4 mass%, the heat shrinkage is lowered, whereby heat resistance is increased. Further, in this amount range, the inorganic fibers have an appropriate water solubility without impairing the fiber quality, whereby the fibers can be processed easily. The preferable content of $Al_2O_3$ is 1.3 to 3.0 mass%.

The amount of $Al_2O_3$ may be 1.3 to 1.95 mass% or 1.4 to 1.7 mass%. Further, the amount of $Al_2O_3$ may be

1.5 to 3 or 2 to 3 mass%. When the amount of $Al_2O_3$ is 2.0 mass% or more, each of the alkaline metal oxide may be contained in an amount of 0.2 mass% or more (for example, 0.2 to 1.5 mass%).

By the above-mentioned composition, the fibers as mentioned above have excellent bio-solubility, in particular, after heating. Due to the excellent bio-solubility before heating, there is small possibility that the health of workers is injured at the time of production, installation or the like. Due to the bio-solubility after heating, there is small possibility that the health of workers is injured at the time of disassembling, dismantling or the like after use in the heated environment.

The bio-soluble inorganic fibers are inorganic fibers of which the solubility in a physiological saline solution at 40°C is 1% or more, for example. Solubility in a physiological saline solution can be measured by the following method, for example. Specifically, first, 1 g of a sample which is prepared by pulverizing inorganic fibers to 200 meshes or less and 150 mL of a physiological saline solution are placed in an Erlenmeyer flask (volume: 300 mL), and the flask is placed in an incubator of 40°C. Next, horizontal vibration of 120 rotations per minute is continuously applied to the Erlenmeyer flask for 50 hours. Thereafter, the concentration of each element (mg/L) contained in a filtrate is measured by an ICP emission spectrometer. Then, the solubility in a physiological saline solution (%) is calculated based on the measured concentration of each element and the content (mass%) of each element in the inorganic fibers before the dissolution. Specifically, if the elements to be measured are silicon (Si), magnesium (Mg), calcium (Ca) and aluminum (Al), the solubility C (%) in a physiological saline solution is calculated by the following formula:

C (%) = [Amount (L) of filtrate x (a1 + a2 + a3 + a4) $\times$ 100] / [mass (mg) of inorganic fibers before dissolution $\times$ (b1 + b2 + b3 + b4) / 100]. In this formula, a1, a2, a3 and a4 are respectively the measured concentration (mg/L) of silicon, magnesium, calcium and aluminum, and b1, b2, b3 and b4 are respectively the content (mass%) of silicon, magnesium, calcium and aluminum in the inorganic fibers before dissolution.

The block produced from a blanket-like product produced formed of the above-mentioned inorganic fibers has a small heat shrinkage. As a result, in a heat insulating structural body formed of a plurality of inorganic fiber blocks, joint opening between inorganic fiber blocks which is generated by heat applied to a heat insulating structural body during use can be suppressed.

The inorganic fibers having the above-mentioned composition can be produced by a common method in this technical field. Specifically, a molten product containing raw material oxides such as $SiO_2$, CaO, MgO, $Al_2O_3$ or the like such that they satisfy the above-mentioned composition range is prepared. The molten product is then formed into fibers. In order to allow the molten product to be fiber, a spinning method in which a molten raw material is flown onto a wheel which is rotated at a high speed, a blow method in which compressed air is applied to a molten raw material, or other methods can be used.

With the above-mentioned composition of the inorganic fibers, it is possible to obtain fibers having a high quality by a normal production method. Further, since a molten material used for producing such fibers has a low viscosity, thin fibers can be obtained at low temperatures. The diameter of the fiber can be made small by spinning at high temperatures at a high speed. The average fiber diameter is normally 2 to 6 $\mu$m, preferably 2 to 4 $\mu$m.

If the fiber diameter is small, the fiber feels smooth, without giving itchy feeling. A small fiber diameter means that the fibers tend to be dissolved easily in a living body, and that the number of fibers per unit volume of a product is increased. Due to the increased number, thermal conductance is lowered to enhance the heat insulating effect. Further, in processing, it is possible to obtain a processed product with a high density, whereby heat insulating effects are enhanced. In addition, if the number of fibers is large, the tensile strength (tensile strength of the blanket) is increased. Accordingly, there are many advantages of the small fiber diameter.

Regarding the evaluation of the inorganic fibers, reference can be made to the Japanese Patent Application No. 2011-59354.

By stacking blanket-like products formed of the above-mentioned inorganic fibers, the inorganic fiber block of the invention is produced. The shape of inorganic fiber blanket-like product includes not only that of common blankets which are commercially available, but also board-like shape such as a felt-like and sheet-like shapes. Hereinbelow, these shape may comprehensively be referred to as blanket.

A blanket can be produced by a common method known in this technical field. For example, inorganic fibers are stacked continuously into a blanket-like shape, followed by a needle-punch processing.

In addition to the above-mentioned inorganic fibers, the blanket may contain an organic binder, an inorganic binder, an inorganic compound or the like. As long as the advantageous effects of the invention are not impaired, common binders or compounds can be used. Examples of the organic binder include starch, acrylic emulsion, pulp, a paper strengthening agent, organic fibers, coagulants or the like. Examples of the inorganic binder include colloidal silica, alumina sol, clay mineral, aluminum salt or the like.

The blanket used in the invention may consist essentially of the inorganic fibers mentioned above, and optionally, an organic binder, an inorganic binder and an inorganic compound, consist of these components. The "consist essentially" means that the above-mentioned blanket is mainly made of inorganic fibers, and optionally, an organic binder, an inorganic binder and an inorganic compound. The content of the inorganic fibers may be 90 mass% or more and 95 mass% or more.

The blanket may be subjected to a heat treatment. Although no particular restrictions are imposed on the heat-treatment temperature as long as it is equal to or lower than the highest temperature at which the blanket is used, the heat treatment temperature is preferably 300 to 1300°C, more preferably 600 to 1200°C, with 700 to 1100°C being further preferable.

Although no particular restrictions are imposed on the thickness of the inorganic fiber blanket, it is normally 3 mm to 60 mm.

The inorganic fiber block of the invention has excellent heat resistance. Specifically, when heat treated at 1000°C for 8 hours, it preferably keep its original shape without being molten. More preferably, it can retain its original shape even after a heat treatment at 1300°C for 8 hours.

Whether the block can retain its shape or not can be judged by the heat shrinkage of the inorganic fiber block-shaped product used in the block. In the invention, keeping the original shape means that, in a sample after heating, a change in dimension before and after the heating is within 10%, preferably 5%.

No restrictions are imposed on the method for producing a block by stacking the blankets. A method known in this technical field can be used. For example, a method in which a plurality of pieces of a blanket which are obtained by cutting a long blanket into pieces such that each piece has the same size are stacked, or a method in which a long narrow strip-like blanket is folded in a zigzag manner (i.e. like an accordion) can be given.

An adhesive may be used between each blanket. As the adhesive, in addition to an acrylic resin, a commercially available organic adhesive such as a styrene resin, a urethane resin, an epoxy resin, a phenol resin and an imide resin may be used. Also, colloidal silica, alumina sol, water glass, an inorganic adhesive or the like may be used. One or two or more may be selected from these.

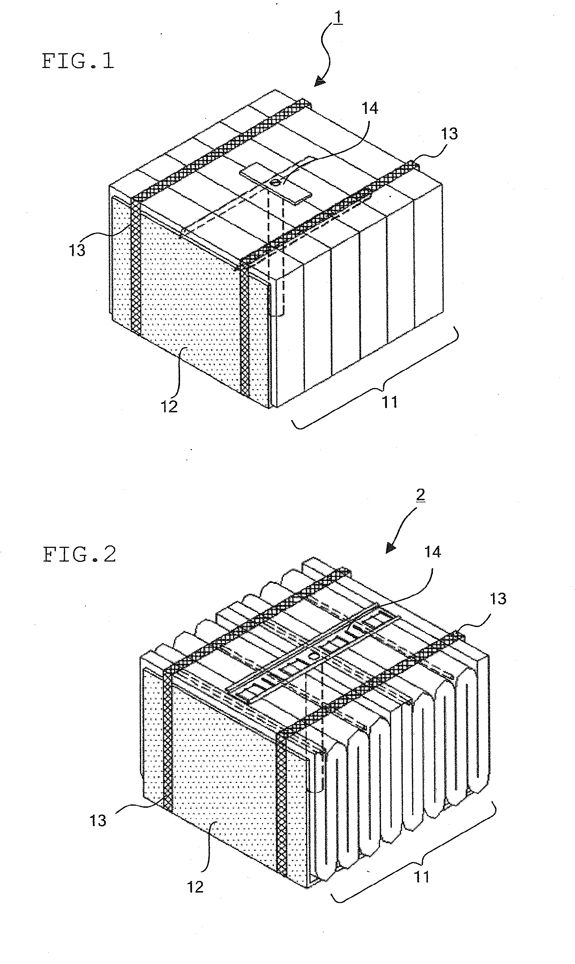

FIG. 1 is a schematic perspective view of the inorganic fiber block according to one embodiment of the invention.

An inorganic fiber block 1 of this embodiment is obtained by stacking six pieces of blanket 11 which has been cut into an approximately square shape so that the stacked blanket pieces have a block-like shape. The pieces of blanket 11 may be adhered with each other by an adhesive, or sewed or fixed with each other by means of a tack pin or the like.

In this embodiment, the pieces of blanket 11 are bundled by means of a bundle band 13. Further, a lateral plate 12 is used. In substantially middle of the inorganic fiber block, a support fitting 14 is provided.

FIG. 2 is a schematic perspective view of the inorganic fiber block according to another embodiment of the invention.

An inorganic fiber block 2 of this embodiment is obtained by folding a long narrow strip-like blanket 11 in an accordion-like manner so that the folded blanket has a block-like shape. In this embodiment, as in the case of the inorganic fiber block 1, the blanket 11 is bundled by means of a bundle band 13. Further, a lateral plate 12 is used. In substantially middle of the inorganic fiber block, a support fitting 14 is provided.

No particular restrictions are imposed on the number of blankets to be stacked. The number can be adjusted such that the stacked blankets have a required shape of a block. In general, about 1 to 30, preferably 3 to 20, further preferably 5 to 15 blankets are stacked.

Although no particular restrictions are imposed on the shape or the size of the block, it is preferred that the block have an appropriate rectangular parallelepiped shape or an appropriate cubic shape. As for the size, in general, it is preferred that one side have a length of about 2.5 cm to 150 cm, preferably 5.0 to 100 cm, and further preferably 5.0 cm to 90 cm.

The density of the inorganic fiber block may be appropriately adjusted according to use. Normally, the density of the inorganic fiber block is 80 kg/m$^3$ to 300 kg/m$^3$, preferably 100 kg/m$^3$ to 250 kg/m$^3$, further preferably 100 kg/m$^3$ to 200 kg/m$^3$. The density can be adjusted by adjusting the density of the blanket or by compressing the stacked body of blankets.

In the inorganic fiber block of the invention, as in the above-mentioned embodiments, a member which is commonly used in this technical field, such as a support fitting, a bundle band (a PP band or the like), a lateral board (reinforced corrugated fiberboard or the like), or the like may be used.

For example, by arranging two or more inorganic fiber blocks such that they are adjacent with each other, a heat insulating structural body can be formed. A heat insulating structural body can be used as a refractory heat insulating material for applying in an inner wall of various industrial furnaces.

Between adjacent blocks, a sealing agent may or may not be filled. As the sealing agent, one or two or more may be appropriately selected from the inorganic fibers mentioned above, alumina fibers, mullite fibers, unshaped materials and inorganic adhesives.

The heat insulating structural body of the invention can suppress joint opening between the inorganic fiber blocks or between blankets constituting the inorganic fiber block. Specifically, in the heat insulating structural body obtained by stacking cubic blocks (one side: about 300 mm) in three rows and three columns, joint opening before and after heating for 24 hours at 1300°C is 7.5 mm or less. The details of the evaluation of the joint opening are described in Examples.

EXAMPLES

Example 1 [Preparation of an inorganic fiber block obtained by stacking and adhesion]

An inorganic fiber having an $SiO_2$ content of 72 mass%, a CaO content of 25 mass%, a MgO content of 0.3 mass% and an $Al_2O_3$ content of 2 mass% was produced.

A blanket composed of this inorganic fiber was produced. This inorganic fiber blanket had a density of 160 $kg/m^3$ and a thickness of 50 mm.

As for the heat shrinkage of the resulting blanket, after heating at 1000°C for 8 hours, the heat shrinkage was -0.1%, and after heating at 1300°C for 8 hours, the heat shrinkage was 3.4%.

The above-mentioned inorganic fiber blanket was cut into a rectangular shape with a dimension of 280 mm $\times$ 300 mm. Six of the blanket pieces were stacked. Adjacent blanket pieces were adhered by an adhesive (acrylic resin).

The stacked body of the blanket pieces was compressed in the direction of stacking such that the entire thickness became 275 mm, whereby an inorganic fiber block was prepared.

An inorganic fiber having an $SiO_2$ content of 66 mass%, a CaO content of 30 mass%, a MgO content of 3 mass% and an $Al_2O_3$ content of 1 mass% was produced, and by using the thus formed fibers, a blanket was produced in the same manner as in Example 1. The heat shrinkage of this blanket was measured. After heating at 1000°C for 8 hours, the heat shrinkage was -0.3%, and after heating at 1300°C for 8 hours, the heat shrinkage was 21.9%. In the test at 1300°C, the blanket was almost molten.

Example 2 [Preparation of an inorganic fiber block obtained by stacking and sewing]

An inorganic fiber blanket was prepared in the same manner as in Example 1, except that the density and the thickness of the inorganic fiber blanket were changed to 136 $kg/m^3$ and 30 mm, respectively.

The inorganic fiber blanket was cut into a 300 mm-square piece, and 12 of the blanket pieces were stacked. The blanket pieces were fixed to each other by means of a tack pin, a support fitting and a band.

The stacked body of the blankets was compressed in the direction of stacking such that the entire thickness became 275 mm, whereby an inorganic fiber block was prepared.

Comparative Example 1

An inorganic fiber block was produced in the same manner as in Example 2, except that ceramic fibers having an $SiO_2$ content of 52 mass% and an $Al_2O_3$ content of 48 mass% were used as the inorganic fibers.

As for the heat shrinkage of the ceramic fiber blanket, after heating at 1000°C for 8 hours, the heat shrinkage was 1.7%, and after heating at 1300°C for 8 hours, the heat shrinkage was 4.1%.

Example 3 [Preparation of an accordion-type inorganic fiber block]

An inorganic fiber block was produced in the same manner as in Example 1, except that the density and the thickness of the inorganic fiber blanket were changed to 100 $kg/m^3$ and 25 mm, respectively.

The inorganic fiber blanket that was a 300-width strip was used. As shown in FIG. 2, the strip was folded into 16 layers in an accordion-like manner. The blankets were fixed to each other by means of a support fitting and a band.

The stacked body of the blankets was compressed in the direction of stacking such that the entire thickness became 275 mm, whereby an inorganic fiber block was prepared.

Comparative Example 2

An inorganic fiber block was produced in the same manner as in Example 3, except that the same ceramic fibers as those in Comparative Example 1 were used as the inorganic fibers.

As for the inorganic fiber blocks prepared in the Examples and Comparative Examples mentioned above, the following heating test was conducted.

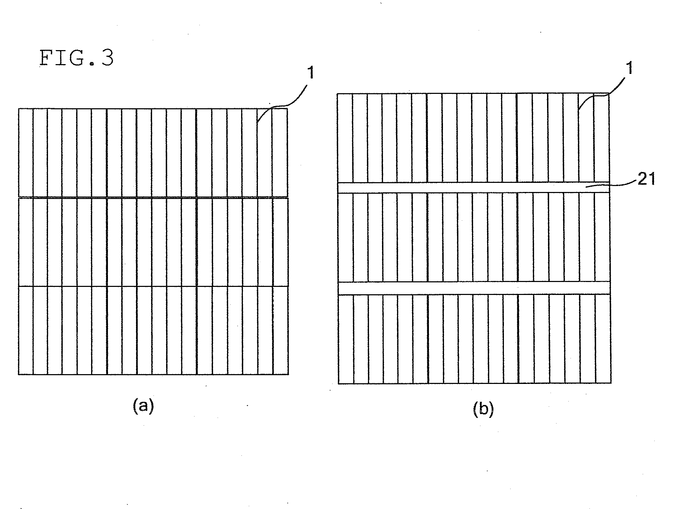

As shown in FIG. 3(a), the inorganic fiber block 1 produced in each example was prepared in a quantity of 9, and these blocks were arranged in three rows and three columns in such a manner that almost no opening (joint opening) was formed between the blocks, whereby heat insulating structural bodies were obtained. The blocks were arranged such that the inorganic fiber blankets were stacked vertically. In FIG. 3, a vertical line shown in the inorganic fiber block 1 indicates the interface between inorganic fiber blankets.

This heat insulating structural bodies were heated for 24 hours at 1000°C, 1200°C and 1300°C. The heat shrinkage of each block before and after the heating was measured. The heat shrinkage was obtained by the following formula taking the length of the block before heating as X mm and the length of the block after heating as Y mm.

$$\text{Heat shrinkage (\%)} = \{(X-Y)/X\} \times 100$$

The measurement was conducted in the stacking direction of the inorganic fiber blankets and in the direction orthogonally crossing the stacking direction (referred to as the "longitudinal direction"). Heat shrinkage was measured for the 9 blocks, and the average value was taken as the heat shrinkage. The results are shown in Tables 1 and 2.

As shown in FIG. 3(b), by heating a heat insulating structural body, a joint 21 is formed. Evaluation was made on the generation of such joint. Specifically, the heat insulating structural bodies were heated for 24 hours at 1000°C, 1200°C and 1300°C. The dimension of the joint 21 before and after the heating was measured. As for the dimension of the joint 21, of the joints formed between the blocks being stacked up and down, the size of a joint which has the largest size in the vertical direction was measured by means of a foot measure. The joint dimension was measured at 6 locations, and the average value was taken as the dimension of the joint.

The dimension of the joint was obtained by the following formula taking the length of the joint after heating as X mm and the length of the joint before heating as Y mm.

$$\text{Dimension of joint (mm)} = X-Y$$

Table 1

|  | Shrinkage in the stacking direction (%) | | |
| --- | --- | --- | --- |
| Test temperature | 1000°C | 1200°C | 1300°C |
| Example 1 | 0.3 | 0.7 | 1.7 |
| Example 2 | 0.3 | 0.9 | 2.1 |
| Example 3 | 0.3 | 0.8 | 1.7 |
| Com. Ex. 1 | 0.9 | 1.7 | 2.2 |
| Com. Ex. 2 | 0.8 | 1.7 | 2.3 |

Table 2

|  | Shrinkage in the longitudinal direction (%) | | |
| --- | --- | --- | --- |
| Test temperature | 1000°C | 1200°C | 1300°C |
| Example 1 | 0 | 0.7 | 1.5 |
| Example 2 | 0.3 | 1.0 | 1.7 |
| Example 3 | 0.4 | 1.2 | 1.8 |
| Com. Ex. 1 | 0.8 | 1.7 | 2.3 |
| Com. Ex. 2 | 0.9 | 1.7 | 2.2 |

Table 3

|  | Dimension of joint (mm) | | |
| --- | --- | --- | --- |
| Test temperature | 1000°C | 1200°C | 1300°C |
| Example 1 | 0.7 | 2.7 | 5.5 |
| Example 2 | 1.2 | 3.2 | 5.8 |

(continued)

|  | Dimension of joint (mm) | | |
|---|---|---|---|
| Test temperature | 1000°C | 1200°C | 1300°C |
| Example 3 | 0.7 | 3.0 | 4.2 |
| Com. Ex. 1 | 2.8 | 4.6 | 9.5 |
| Com. Ex. 2 | 2.6 | 4.9 | 7.8 |

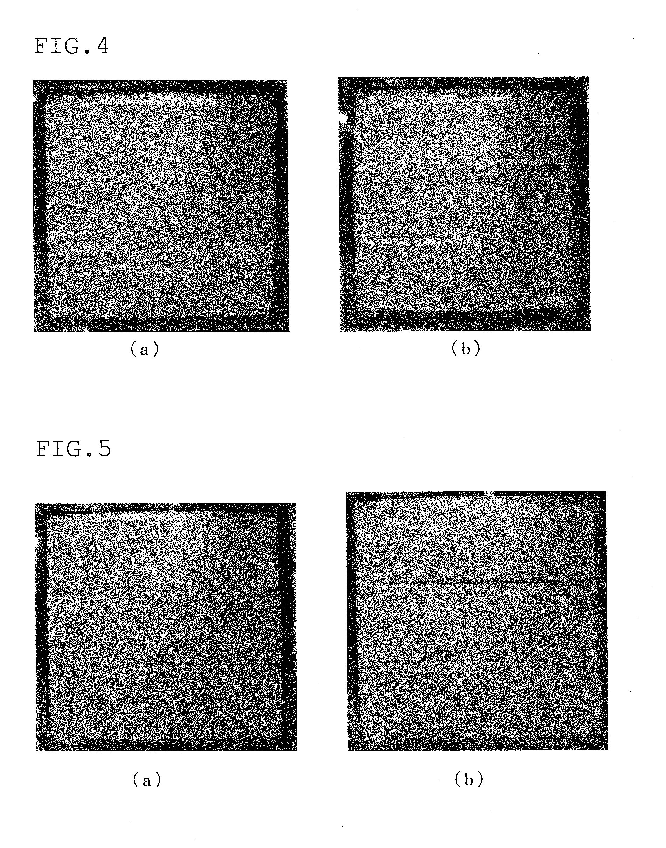

As for the heat insulating structural body formed of the inorganic fiber blocks prepared in Example 2, the photograph of the structural body before heating is shown in FIG. 4(a) and the photograph of the structural body after heating at 1300°C for 24 hours is shown in FIG. 4(b).

As for the heat insulating structural body formed of the inorganic fiber blocks prepared in Comparative Example 1, the photograph of the structural body before heating is shown in FIG. 5(a) and the photograph of the structural body after heating at 1300°C for 24 hours is shown in FIG. 5(b).

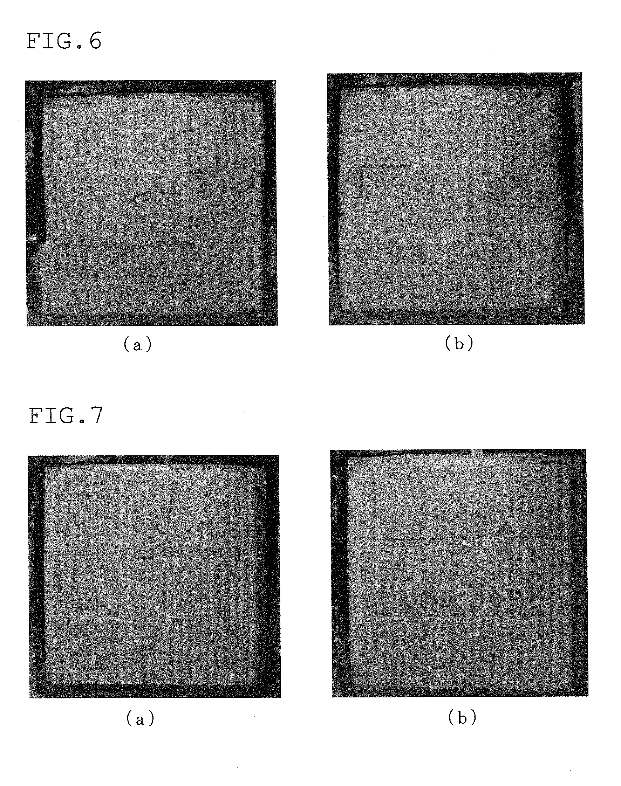

As for the heat insulating structural body formed of the inorganic fiber blocks prepared in Example 3, the photograph of the structural body before heating is shown in FIG. 6(a) and the photograph of the structural body after heating at 1300°C for 24 hours is shown in FIG. 6(b).

As for the heat insulating structural body formed of the inorganic fiber blocks prepared in Comparative Example 2, the photograph of the structural body before heating is shown in FIG. 7(a) and the photograph of the structural body after heating at 1300°C for 24 hours is shown in FIG. 7(b).

From the photographs shown in FIGs. 4 to 7, it could be confirmed that the heat insulating structural body formed of the inorganic fiber blocks of the invention hardly suffered from generation of joint opening after heating as compared with those in Comparative Examples.

INDUSTRIAL APPLICABILITY

The inorganic fiber block of the invention can be used as a refractory heating insulating material for lining of various industrial furnaces or the like.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

**Claims**

1.   An inorganic fiber block obtained by stacking blanket-like products each comprising inorganic fibers, wherein the composition of the inorganic fibers have the following composition:

$SiO_2$: 66 to 82 mass%
CaO: 10 to 34 mass%
MgO: 0 to 3 mass%
$Al_2O_3$: 0 to 5 mass%,
and the total content of $SiO_2$, CaO, MgO and $Al_2O_3$ is 98 mass% or more.

2.   The inorganic fiber block according to claim 1, wherein the inorganic fibers have the following composition:

$SiO_2$: 71 to 80 mass%
CaO: 18 to 27 mass%
MgO: 0 to 3 mass%
$Al_2O_3$: 1.1 to 3.4 mass%,
provided that the content of each of $ZrO_2$ and $R_2O_3$ (R is selected from Sc, La, Ce, Pr, Nd, Sm, Eu, Gd, Tb, Dy, Ho, Er, Tm, Yb, Lu, Y or a mixture of these) is 0.1 mass% or less, the content of an alkaline metal oxide is 0.2 mass% or less, and the total content of $SiO_2$, CaO, MgO and $Al_2O_3$ is 99 mass% or more.

3.   The inorganic fiber block according to claim 1, wherein the inorganic fibers have the following composition:

SiO$_2$: 71 to 80 mass%
CaO:18 to 27 mass%
MgO: 0 to 3 mass%
Al$_2$O$_3$: 2.0 to 3.4 mass%,
provided that the content of each of ZrO$_2$ and R$_2$O$_3$ (R is selected from Sc, La, Ce, Pr, Nd, Sm, Eu, Gd, Tb, Dy, Ho, Er, Tm, Yb, Lu, Y or a mixture of these) is 0.1 mass% or less, and the total content of SiO$_2$, CaO, MgO and Al$_2$O$_3$ is 99 mass% or more.

4.   The inorganic fiber block according to any of claims 1 to 3, which keeps its original shape after heating at least at 1000°C for 8 hours.

5.   The inorganic fiber block according to any of claims 1 to 3, which keeps its original shape after heating at least at 1300°C for 8 hours.

6.   A heat insulating structural body obtained by arranging two or more inorganic fiber blocks according to any of claims 1 to 5 such that they are adjacent with each other.

7.   The heat insulating structural body according to claim 6, wherein joint opening between the inorganic fiber blocks constituting the heat insulating structural body or between the blankets constituting the inorganic fiber block is 7.5 mm or less after heating at 1300°C for 24 hours.

FIG.1

FIG.2

FIG.3

(a)

(b)

FIG.4

(a)

(b)

FIG.5

(a)

(b)

FIG.6

(a)

(b)

FIG.7

(a)

(b)

**EP 2 765 380 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09156989 A
- JP 2006076015 A
- JP 2011059354 A